# EUROPÄISCHE PATENTANMELDUNG

(11) **EP 2 886 486 A1**
(43) Veröffentlichungstag der Anmeldung: **24.06.2015**
(21) Anmeldenummer: 14199076.2
(22) Anmeldetag: 18.12.2014
(51) Int. Cl.: B65D 81/20, B65B 31/02, F25D 23/00, F25D 11/00, A23L 3/36, A23L 3/015

(54) **Vakuumkammer**

(30) Priorität: 18.12.2013 DE 102013226548
(71) Anmelder: Giger, Ulrich, 8608 Bubikon (CH)
(72) Erfinder: Giger, Ulrich, 8608 Bubikon (CH)
(74) Vertreter: Herrmann, Johanna

(57) **Zusammenfassung**

Eine Vakuumkammer (1), umfasst eine Abdeckung (3), eine Wand (2) sowie ein Bodenelement (4), wobei die Wand (2) ein Wandelement (5,6,7,8) umfasst, welches zumindest teilweise relativ zur Abdeckung (3) oder dem Bodenelement (4) verschiebbar ist. Das Wandelement (5,6,7,8) weist eine erste Position auf, in welcher die Vakuumkammer geöffnet ist und von zumindest zwei Seiten zugänglich ist und eine zweite Position, in welcher die Vakuumkammer geschlossen ist.

## Beschreibung

Die Erfindung betrifft eine Vakuumkammer und ein Verfahren zum Betrieb der Vakuumkammer. Des Weiteren betrifft die Erfindung eine Vakuumkammer mit einer Kühlvorrichtung, welche als Vakuumkühlvorrichtung ausgebildet ist. Diese Vakuumkammer kann insbesondere für die Vakuumkühlung von Lebensmitteln eingesetzt werden.

Herkömmliche Vakuumkammern werden mit dem Produkt bestückt, wozu die Vakuumkammer geöffnet, beladen und wieder geschlossen wird. Das Produkt wird im Innenraum der Vakuumkammer platziert, die Vakuumkammer geschlossen und ein Vakuum angelegt. Soll das Produkt wieder entnommen werden, wird der Druck wieder auf den Umgebungsdruck erhöht, bevor die Vakuumkammer geöffnet wird. Das heisst, eine derartige Vakuumkammer ist an eine Vorrichtung zur Erzeugung des Vakuums gekoppelt. Gegebenenfalls kann auch noch eine Kühlvorrichtung vorgesehen sein.

Vakuumkammern werden grundsätzlich als ortsfeste Installation in Produktionshallen oder Labors vorgesehen. Derartige Vakuumkammern werden über eine Türe geöffnet und wieder verschlossen. Das heisst, das Produkt, welches einer Vakuumbehandlung unterzogen werden soll, muss diese Türe passieren, um in die Vakuumkammer zu gelangen.

Wenn die Vakuumkammer batchweise betrieben wird, werden die Produkte, welche für eine Vakuumbehandlung in die Vakuumkammer gelangen müssen, vor der Tür in Wartestellung platziert. Das heisst der Zugang zur Vakuumkammer ist bei sonst kontinuierlichem Betrieb teilweise mit Produkten verstellt, welche in der Vakuumkammer behandelt werden müssen.

Wenn also ein Chargenwechsel stattfindet, muss darauf geachtet werden, dass genügend Manövrierraum um die Vakuumkammer herum vorhanden ist, dass der Vakuumkammer fertige Produkte entnommen werden können und gegebenenfalls einem nachfolgenden Arbeitsschritt einer anderen Verarbeitungsstation zugeführt werden können. Üblicherweise sind derartige Produkte auf Gestellen gelagert, welche im Produktionsverlauf manuell oder über Staplerfahrzeuge von einer Verarbeitungsstation zu einer nachfolgenden Verarbeitungsstation bewegt werden.

Das heisst, dass in der Umgebung der Tür der Vakuumkammer genügend Freiraum als Manövrierraum vorhanden sein muss, um Produkte zu lagern, welche auf die Vakuumbehandlung in der Vakuumkammer warten, als auch um der Vakuumkammer fertige Produkte zu entnehmen.

Es ist aus der DE 4 414 946 C2 bekannt, einen Behälter vorzusehen, der aus drei teleskopartig auseinanderziehbaren und ineinander verschiebbaren Wandteilen zusammengesetzt ist. Die Wandteile können eine kreisförmige oder eine rechteckige Grundrissform aufweisen. Der Behälter dient der Aufnahme eines Schlauchbeutels für eine pastöse Masse. Wenn der Schlauchbeutel mit Masse befüllt ist, sind die Wandteile in der auseinander gezogenen Stellung, wenn der Schlauchbeutel entleert ist, werden die Wandteile zusammengeschoben, um das Volumen für den Transport des Behälters auf circa ein Drittel zu reduzieren.

Wenn keine Gefahr besteht, dass das Füllgut aus dem Behälter austritt, kann auch ein Behälter aus einem mehrfach aufgewickelten Band verwendet werden, wie er in der DE 195 05 11 A1 gezeigt ist. Das Band wird in Bandschlaufen aufgewickelt, sodass die einzelnen Bandschlaufen die Wand des Behälters ausbilden. Die Bandschlaufen können beim Ausziehen des Behälters derart aneinander gleiten, dass eine im Wesentlichen für Schüttgüter oder zähflüssige Massen dichte Behälterwand erhältlich ist. Sollen die Schüttgüter oder zähflüssigen Massen aus diesem Behälter ausgetragen werden, schieben sich die einzelnen Bandschlaufen zusammen, sodass das Volumen des Behälters verringert wird. Hierdurch wird der Behälterinhalt ausgetragen.

In dem Dokument DE 10 2004 063 316 A1 wird ein Aufbewahrungsbehälter und/oder Transportbehälter für verderbliche Lebensmittel offenbart. Dieser Aufbewahrungsbehälter hat eine als Faltenbalg ausgebildete Behälterwand, wodurch das Volumen des Behälters verändert werden kann. Wenn der Faltenbalg zusammengedrückt wird, entweicht ein Teil der im Behälter befindlichen Luft sodass ein Unterdruck entsteht. In diesem Zustand weist der Aufbewahrungsbehälter auch das minimale Transportvolumen auf.

Alle diese Lösungen betreffen eine Volumenreduktion des Behälters, um dessen Transportvolumen zu verringern. Die genannten Lösungsvorschläge dienen somit hierzu, die Transportkosten zu senken, indem das Transportvolumen des Behälters reduziert wird.

Es ist auch bekannt, Lebensmittel in Konserven unter Vakuumbedingungen zu lagern, was mittels einer Konserve gemäss US 5 469 979 A erreicht werden kann. Hierzu wird ein zylinderförmiger Behälter vorgesehen, der einen mit einem Ventil und einer Saugpumpe versehenen Verschlussdeckel aufweist sowie einen kolbenartig in dem zylinderförmigen Behälter beweglichen Boden. Der Verschlussdeckel ist als Drehverschluss ausgebildet, der geöffnet wird, wenn das Lebensmittel konsumiert werden soll und dadurch Luft in den zylinderförmigen Behälter gelangt. In der in dem Dokument US 5 469 979 A gezeigten Lösung wird allerdings das Behältervolumen des zylinderförmigen Behälters nicht verändert, sodass für die Befüllung oder Entleerung der Konserve zusätzlicher Manövrierraum benötigt wird.

Keine der vorbekannten Lösungen betrifft das Problem, die Zugänglichkeit zu einem Vakuumbehälter für die Dauer der Befüllung oder Entleerung zu verbessern.

Es ist Aufgabe der Erfindung, eine Vakuumkammer zu schaffen, welche einen wesentlich geringeren Manövrierraum benötigt.

Die Aufgabe der Erfindung wird mittels einer Vakuumkammer gelöst, die derart bewegbar ist, dass es im geöffneten Zustand möglich ist, die Vakuumkammer von zumindest zwei, bevorzugt von allen Seiten zu beladen und zu entladen.

Die Vakuumkammer umfasst eine Abdeckung, eine Wand sowie ein Bodenelement. Die Wand erstreckt sich zwischen Abdeckung und Bodenelement. Die Abdeckung ist in einem ortsfesten Rahmen aufgenommen, wobei die Wand mit der Abdeckung verbunden ist, sodass die Wand sich von der Abdeckung in Richtung des Bodenelements erstreckt. Durch die Abdeckung, die Wand und das Bodenelement wird ein Innenraum begrenzt, der von der Umgebung fluiddicht verschliessbar ist, wobei die Wand ein Wandelement umfasst, welches zumindest teilweise relativ zur Abdeckung oder dem Bodenelement verschiebbar ist. Das Wandelement weist eine erste Position auf, in welcher die Vakuumkammer geöffnet ist und von zumindest zwei Seiten zugänglich ist und eine zweite Position, in welcher die Vakuumkammer geschlossen ist. Insbesondere kann das Wandelement zum Öffnen der Vakuumkammer angehoben werden. Zum Schliessen der Vakuumkammer wird es derart abgesenkt, dass die Unterseite des Wandelements auf das Bodenelement zu liegen kommt. Hierdurch wird die Vakuumkammer geschlossen und im Behälterinnenraum kann ein Vakuum erzeugt werden.

Das Wandelement weist nach einem vorteilhaften Ausführungsbeispiel in seiner ersten Position den grösstmöglichen Abstand zum Bodenelement auf. In seiner zweiten Position liegt das Wandelement auf dem Bodenelement auf.

Zwischen dem Wandelement und dem Bodenelement kann eine Dichtung angeordnet sein, sodass der Spalt zwischen Wandelement und Bodenelement fluiddicht verschliessbar ist, wenn sich das Wandelement in seiner zweiten Position befindet. Insbesondere kann die Dichtung eine umlaufende Dichtung sein. Die Dichtung kann in einer Nut an der Unterseite des Wandelements aufgenommen sein.

Nach einem Ausführungsbeispiel kann das Wandelement eine Mehrzahl von Teilwandelementen umfassen. Insbesondere können die Teilwandelemente derart relativ zueinander verschiebbar sein, dass sie in der ersten Position ineinander angeordnet sind und/oder dass sie in der zweiten Position teleskopartig gegen einander derart bewegbar sind, sodass sie zwischen Bodenelement und Abdeckung angeordnet sind. Zwei benachbarte Teilwandelemente können derart ausgestaltet sein, dass der äussere Umfang des zweiten Teilwandelements maximal dem inneren Umfang des ersten Teilwandelements entspricht, sodass das zweite Teilwandelement in das erste Teilwandelement einschiebbar ist. Insbesondere kann die Wand aus einer Abdeckung und einem einzigen Wandelement bestehen. Die Abdeckung und das Wandelement sind einstückig ausgebildet, das heisst, Abdeckung und Wandelement sind nicht relativ zueinander bewegbar.

Nach einem Ausführungsbeispiel kann die Vakuumkammer mit mindestens einem Verbindungselement an der Decke einer Halle angebracht sein, oder in einer Rahmenkonstruktion aufgenommen sein. Hierzu ist die Vakuumkammer vorteilhafterweise an der Decke einer Produktionshalle oder in einer Rahmenkonstruktion aufgehängt.

Zur Abdichtung der Wandelemente gegeneinander kann zwischen benachbarten Wandelementen und/oder dem Bodenelement eine Dichtung vorgesehen sein.

Eine Vakuumpumpe kann gemäss jedem der Ausführungsbeispiele auf der Abdeckung, dem an äusserster Position gelegenen Wandelement oder der Rahmenkonstruktion angebracht sein.

Zumindest eines der Wandelemente kann durch einen Seilzug oder mittels eines an einer Gewindestange führbaren Koppelungselements verschiebbar sein.

Die Querschnittsform des Grundrisses des Wandelements oder der Wandelemente kann eine geschlossene Kurve ausbilden, die insbesondere Elemente aus der Gruppe der Kreise, Ellipsen, Vielecke enthält.

Das Verfahren zum Betrieb einer Vakuumkammer umfasst die nachfolgenden Schritte. Die Vakuumkammer weist eine Wand, ein Bodenelement und eine Abdeckung aufweist, wobei sich die Wand im geschlossenen Zustand zwischen Bodenelement und Abdeckung erstreckt und den durch Bodenelement, Wand und Abdeckung gebildeten Innenraum fluiddicht verschliesst. Die Wand umfasst ein Wandelement, welches zumindest teilweise relativ zur Abdeckung verschiebbar ist. Die Vakuumkammer wird in einem ersten Schritt geöffnet, wobei zum Öffnen das Wandelement angehoben wird, wobei nach Anheben des Wandelements die durch Vakuum oder Kühlen behandelte Ware der Vakuumkammer entnommen wird, wobei durch Vakuum oder Kühlen zu behandelnde Ware in die Vakuumkammer eingebracht wird, indem sie auf das Bodenelement abgestellt wird, sodann die Vakuumkammer geschlossen wird, indem das Wandelement abgesenkt wird.

Nachfolgend wird die erfindungsgemässe Vakuumkammer anhand einiger Ausführungsbeispiele dargestellt. Es zeigen
Fig. 1: ein zweidimensionales Schnittbild durch ein erstes Ausführungsbeispiel einer Vakuumkammer in geschlossenem Zustand,
Fig. 2: ein zweidimensionales Schnittbild des Ausführungsbeispiels einer Vakuumkammer gemäss Fig. 1 in geöffnetem Zustand,
Fig. 3: eine Ansicht der Vakuumkammer der Fig. 1 von oben,
Fig. 4: eine Ansicht einer Vakuumkammer nach einem zweiten Ausführungsbeispiel von oben,
Fig. 5: ein zweidimensionales Schnittbild durch ein drittes Ausführungsbeispiel einer Vakuumkammer in geschlossenem Zustand,
Fig. 6: ein zweidimensionales Schnittbild das Ausführungsbeispiel einer Vakuumkammer gemäss Fig. 5 in geöffnetem Zustand,
Fig. 7: eine Ansicht der Vakuumkammer der Fig. 1 im geschlossenen Zustand,
Fig. 8: eine Ansicht der Vakuumkammer der Fig. 7 im offenen Zustand,
Fig. 9: eine weitere Ansicht der Vakuumkammer der Fig. 7 im offenen Zustand,
Fig. 10: eine Ansicht der Vakuumkammer der Fig. 7 in welcher der Innenraum teilweise geschnitten dargestellt ist,
Fig. 11: ein Detail der Fig. 10,
Fig. 12: eine Vakuumkammer mit kreisförmigem Querschnitt,
Fig. 13: eine Vakuumkammer mit rechteckigem Querschnitt,
Fig. 14: die Vakuumkammer der Fig. 12 von oben,
Fig. 15: die Vakuumkammer der Fig. 13 von oben,
Fig. 16: die Vakuumkammer der Fig. 13 in geöffnetem Zustand,
Fig. 17: eine Dichtungslösung für zwei benachbarte Wandelemente gemäss einer ersten Variante,
Fig. 18: eine Dichtungslösung für zwei benachbarte Wandelemente gemäss einer zweiten Variante,
Fig. 19: eine Anordnung von zwei Vakuumkammern nach einem vierten Ausführungsbeispiel,
Fig. 20: eine Vakuumkammer nach einem fünften Ausführungsbeispiel im geschlossenen Zustand,
Fig. 21: die Vakuumkammer nach dem fünften Ausführungsbeispiel im offenen Zustand.

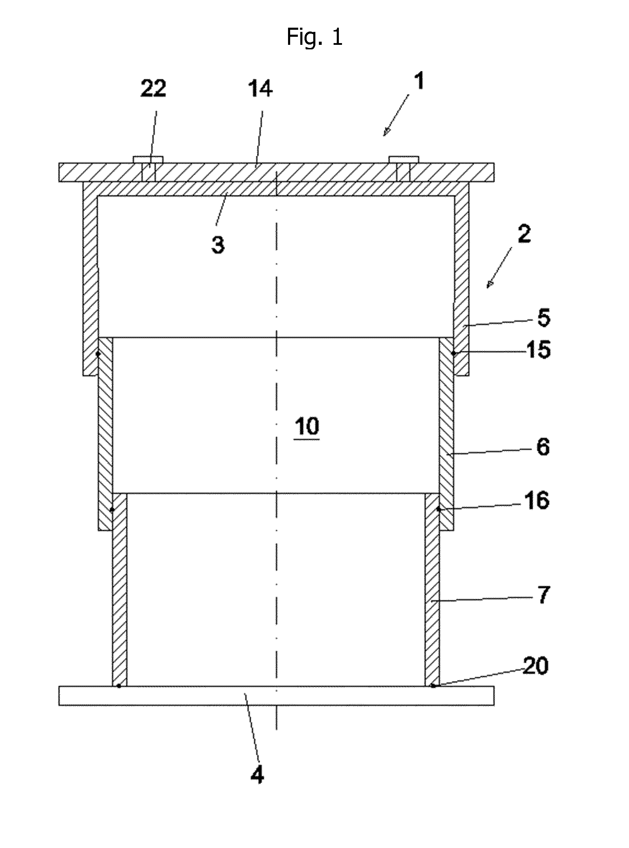

Die Vakuumkammer 1 gemäss Fig. 1 besteht aus einer Wand 2, einer Abdeckung 3 und einem Bodenelement 4. Im geschlossenem Zustand bildet die Wand 2 eine fluiddichte Verbindung zwischen Abdeckung 3 und Bodenelement 4 aus.

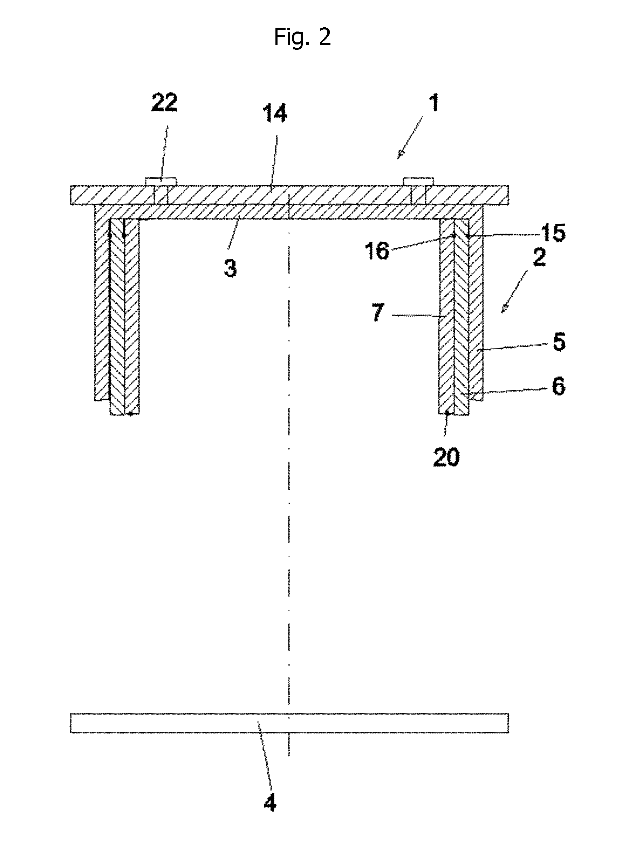

Die Wand 2 ist aus mehreren Wandelementen 5, 6, 7 aufgebaut. Die Wandelemente 6, 7 sind zumindest teilweise relativ zur Abdeckung 3 verschiebbar. Jedes der Wandelemente 6, 7 weist eine erste Position auf, in welcher die Vakuumkammer geöffnet ist und von zumindest zwei Seiten zugänglich ist, was in Fig. 2 dargestellt ist. Das Wandelement weist eine zweite Position auf, in welcher die Vakuumkammer 1 geschlossen ist. Das Wandelement 7 liegt in der zweiten Position auf dem Bodenelement 4 auf. Zwischen dem Wandelement 7 und dem Bodenelement 4 ist eine Dichtung 17 angeordnet, sodass der Spalt zwischen dem Wandelement und Bodenelement fluiddicht verschliessbar ist, wenn sich das Wandelement in seiner zweiten Position befindet.

In der in Fig. 2 dargestellten geöffneten Stellung in der ersten Position weist das Wandelement 5, 6, 7 den grösstmöglichen Abstand zum Bodenelement auf. Zwischen den Wandelementen und dem Bodenelement ist somit ein Manövrierraum geschaffen, der von jeder Seite aus zugänglich ist. Daher können Produkte auf jeder Seite entnommen werden und von jeder Seite her auf dem Bodenelement platziert werden.

Das Wandelement 5, 6, 7 ist somit aus einer Mehrzahl von Teilwandelementen aufgebaut. Die Teilwandelemente 6, 7 sind derart relativ zueinander verschiebbar, dass sie in der ersten Position ineinander angeordnet sind und dass sie in der zweiten Position teleskopartig gegeneinander derart bewegbar sind, sodass sie sich zwischen Bodenelement 4 und Abdeckung 3 erstrecken.

Zwischen benachbarten Wandelementen 5, 6, 7 ist eine Dichtung 15, 16 vorgesehen. Diese Dichtung kann als umlaufende Dichtung ausgebildet sein. Sie kann in einer Nut eines der Wandelemente 5, 6, 7 aufgenommen sein.

Die Vakuumkammer 1 kann über ein Verbindungselement 22 an der Decke 14 einer Halle angebracht sein oder in einer Rahmenkonstruktion aufgenommen sein.

Fig. 2 zeigt in einem zweidimensionalen Schnittbild das Ausführungsbeispiel einer Vakuumkammer gemäss Fig. 1 in geöffnetem Zustand. Die Wandelemente 6, 7 sind derart angehoben, dass sie mit ihrem oberen Ende die Unterseite der Abdeckung 3 berühren. Der Zwischenraum zwischen den Wandelementen 5, 6, 7 und dem Bodenelement 4 ist somit völlig frei zugänglich.

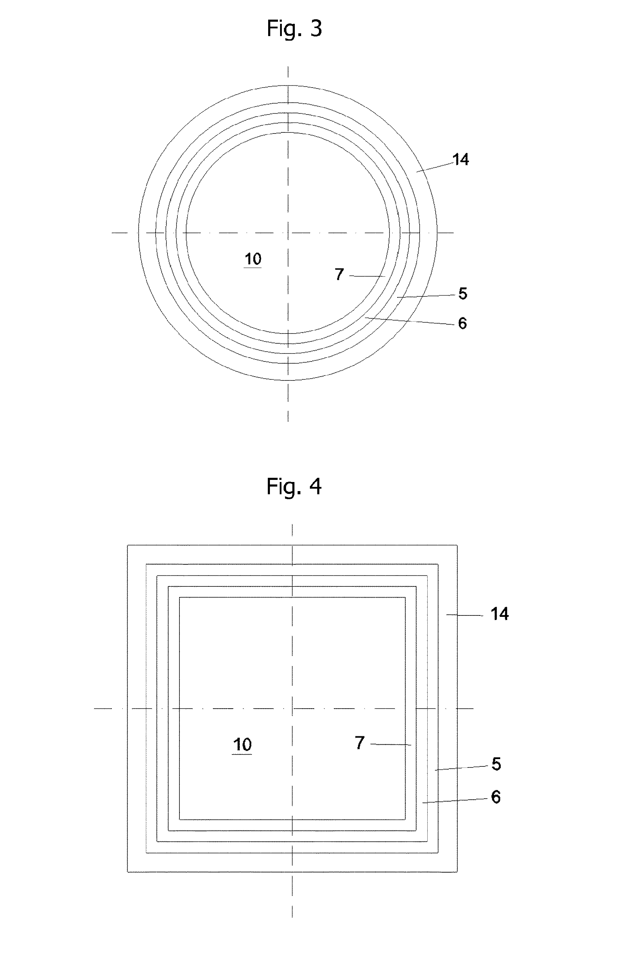

Fig. 3 zeigt eine Ansicht der Vakuumkammer der Fig. 1 von oben. Die Vakuumkammer hat einen im Wesentlichen zylindrischen Querschnitt.

Fig. 4 zeigt eine Ansicht einer Vakuumkammer nach einem zweiten Ausführungsbeispiel von oben, welches sich von dem Ausführungsbeispiel gemäss Fig. 3 dahingehend unterscheidet, dass die Vakuumkammer einen rechteckigen Querschnitt aufweist. Selbstverständlich ist die Querschnittsform nicht auf eines der Ausführungsbeispiele gemäss Fig. 3 oder Fig. 4 beschränkt.

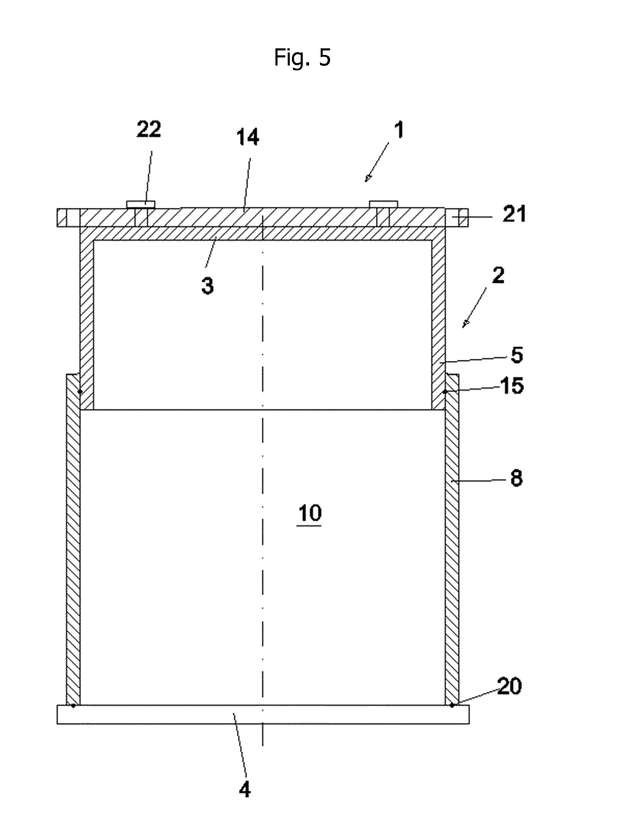

Fig. 5 zeigt ein zweidimensionales Schnittbild durch ein drittes Ausführungsbeispiel einer Vakuumkammer in geschlossenem Zustand. Dieses Ausführungsbeispiel unterscheidet sich vom Ausführungsbeispiel gemäss Fig. 1 derart, dass nur ein einziges Wandelement 8 vorgesehen ist, welches sich relativ zu der Abdeckung 3 und dem Bodenelement 4 bewegt. Das Wandelement 8 ist in Fig. 5 in der zweiten Position gezeigt, in welcher die Vakuumkammer geschlossen ist. Das Wandelement 8 ist ausserhalb des Wandelements 5 angeordnet, welches mit der Abdeckung 3 einteilig ausgeführt ist. Das Wandelement 8 gleitet somit entlang der äusseren Oberfläche des Wandelements 5 nach oben, wenn die Vakuumkammer 1 geöffnet werden soll bzw. nach unten, wenn die Vakuumkammer geschlossen werden soll. Im geschlossenen Zustand wird der Innenraum 10 von der Umgebung fluiddicht abgeschlossen. Das Wandelement 8 weist an seinem unteren Ende eine Dichtung 17 auf, welche im geschlossenen Zustand auf das Bodenelement 4 zu liegen kommt.

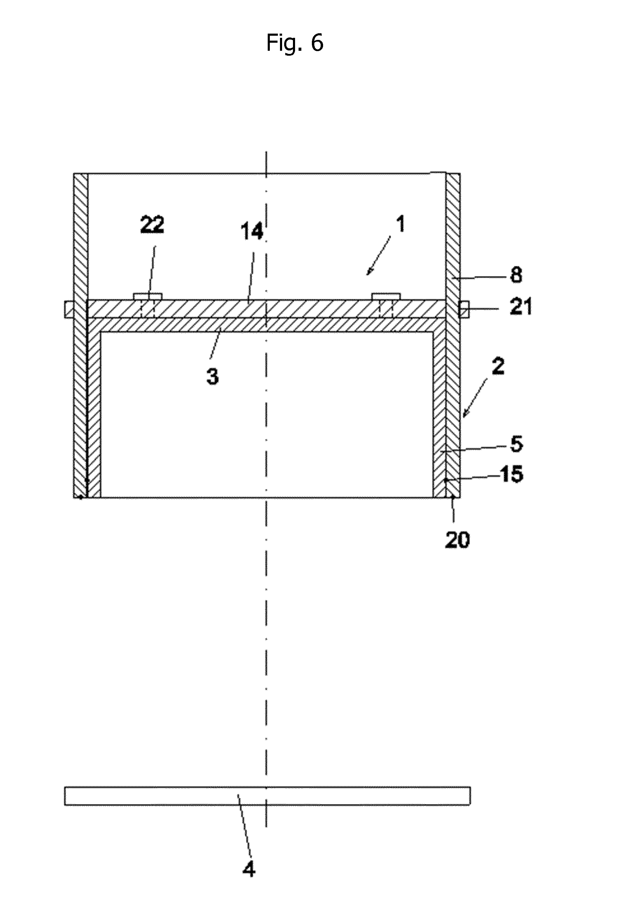

Zwischen dem Wandelement 8 und dem Wandelement 5 ist ebenfalls eine Dichtung 15 angeordnet. Diese Dichtung ist nur schematisch dargestellt und sie erstreckt sich über den Umfang des Wandelements 5, 8. Das Wandelement 8 kann länger als das Wandelement 5 sein. In diesem Fall wird es über die Abdeckung 3 und gegebenenfalls auch über die Decke oder Rahmenkonstruktion hinaus ragen, was in Fig. 6 dargestellt ist. In der Decke oder der Rahmenkonstruktion 14 ist somit ein Durchgang 21 vorgesehen, durch welchen das Wandelement 8 zum Öffnen hindurchgeführt werden kann.

Das Verfahren zum Betrieb einer Vakuumkammer 1 nach jedem der vorhergehenden Ausführungsbeispiele umfasst die nachfolgend beschriebenen Schritte. Die Vakuumkammer weist eine Wand 2, ein Bodenelement 4 und eine Abdeckung 3 auf, wobei sich die Wand 2 im geschlossenen Zustand zwischen Bodenelement und Abdeckung erstreckt und den durch Bodenelement, Wand und Abdeckung gebildeten Innenraum 10 fluiddicht verschliesst.

Die Wand 2 umfasst mindestens ein Wandelement 5, 6, 7, 8, welches zumindest teilweise relativ zur Abdeckung 3 verschiebbar ist. Die Vakuumkammer wird in einem ersten Schritt geöffnet, wobei zum Öffnen das Wandelement 6, 7, 8 angehoben wird, wobei nach Anheben des Wandelements das behandelte Produkt der Vakuumkammer entnommen wird, danach ein zu behandelndes Produkt in die Vakuumkammer eingebracht wird, auf das Bodenelement 4 abgestellt wird, sodann die Vakuumkammer geschlossen wird, indem das Wandelement 6, 7, 8 abgesenkt wird.

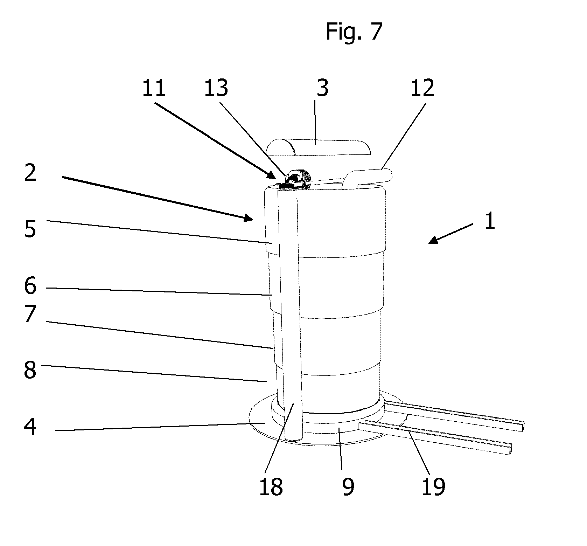

Fig. 7 zeigt eine Ansicht der Vakuumkammer 1 der Fig. 1 von aussen in geschlossenem Zustand. Die Vakuumkammer 1 gemäss Fig.7 besteht aus einer Wand 2, einer Abdeckung 3 und einem Bodenelement 4. Die Wand 2 kann ein Auflageelement 9 aufweisen, mittels welchem die Wand an ihrem unteren Ende auf dem Bodenelement 4 aufliegt. In geschlossenem Zustand bildet die Wand 2 eine fluiddichte Verbindung zwischen Abdeckung 3 und Bodenelement 4 aus. Wenn die Vakuumkammer geschlossen ist, und ein Vakuum angelegt ist, entsteht zwischen dem Auflageelement 9 und dem Bodenelement 4 eine fluiddichte Verbindung. An das Auflageelement kann ein Befüllungs- oder Entleerungselement 19 anschliessen, das in Fig. 7 schematisch als eine Führungsschiene angedeutet ist. Das Befüllungs- oder Entleerungselement 19 kann eine Rampe umfassen, es kann auch eine Fördervorrichtung vorgesehen sein, um ein automatisches Befüllen der Vakuumkammer mit Lebensmitteln zu ermöglichen oder nach Abschluss des Vakuumverfahrens nach dem Öffnen der Vakuumkammer die vakuumgekühlten Lebensmittel wieder aus der Vakuumkammer zu entnehmen.

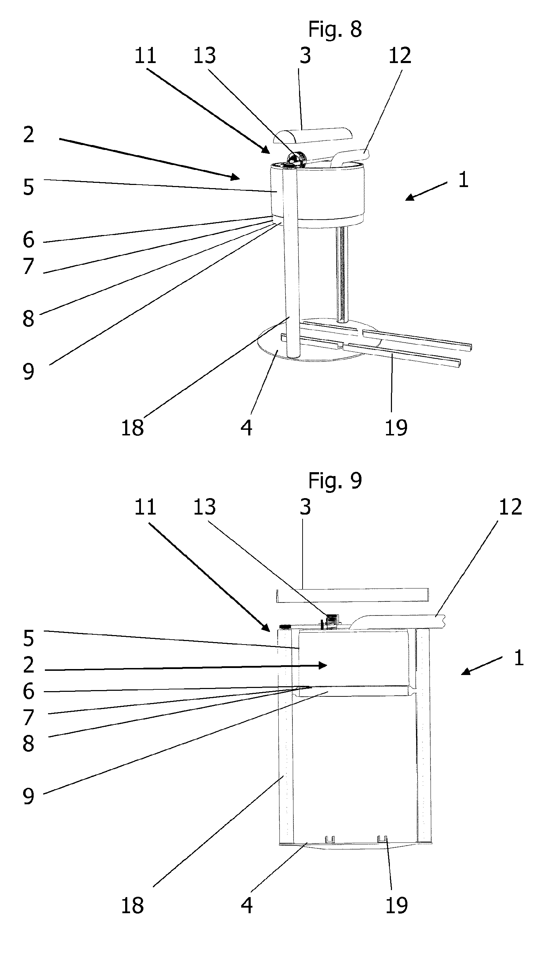

Die Wand 2 ist aus mehreren Wandelementen 5, 6, 7, 8 aufgebaut. Die Wandelemente 6, 7, 8 sind zumindest teilweise relativ zur Abdeckung 3 verschiebbar. Jedes der Wandelemente 6, 7, 8 weist eine erste Position auf, in welcher die Vakuumkammer geöffnet ist und von zumindest zwei Seiten zugänglich ist, was in Fig. 8 dargestellt ist. Die Wandelemente befinden sich in einer zweiten Position, in welcher die Vakuumkammer 1 geschlossen ist, was in Fig. 7 dargestellt ist. In dieser zweiten Position erstrecken sich die Wandelemente 6, 7, 8 über eine grössere Länge, um den Abstand zwischen dem an der Abdeckung befestigten Wandelement 5 und dem Bodenelement 4 zu verschliessen. Die Wandelemente 6, 7, 8 sind somit in Bezug auf die erste Position teleskopartig ausziehbar. Das Wandelement 8 liegt in der zweiten Position mit dem Auflageelement 9 auf dem Bodenelement 4 auf. Zwischen dem Auflageelement 9 und dem Bodenelement 4 ist eine hier nicht sichtbare Dichtung 20 angeordnet oder das Auflageelement 9 enthält eine Dichtung, sodass der Spalt zwischen dem Bodenelement 4 und dem Auflageelement 9 fluiddicht verschliessbar ist, wenn sich das Wandelement 8 in seiner zweiten Position befindet.

Die Abdeckung 3 ist in Fig. 7 teilweise abgenommen, um den Blick auf einen Hebe- oder Absenkmechanismus 11 sowie dessen Antrieb 13 freizugeben. Der Antrieb 13 ermöglicht das kontrollierte Absenken und Anheben der Wandelemente 6, 7, 8. Der Hebe- oder Absenkmechanismus 11 umfasst den Antrieb 13 sowie eine Antriebswelle, die ein Spindelelement oder eine Gewindestange 18 betätigen kann, entlang dessen/derer die Wandelemente 6, 7, 8 kontrolliert nach unten oder oben bewegt werden können, je nachdem ob die Vakuumkammer geschlossen oder geöffnet werden soll. Zumindest das unterste Wandelement ist hierzu mit der Gewindestange 18 über das Auflageelement 9 verbunden, was in Fig. 9 schematisch dargestellt ist.

In Fig. 7 ist auch ein Anschlussrohrelement 12 zu einer Vakuumpumpe gezeigt. Dieses Anschlussrohrelement 12 reicht in den Innenraum der Vakuumkammer. Es stellt die Verbindung zwischen dem Innenraum der Vakuumkammer und der Vakuumpumpe her. Sobald die Vakuumkammer geschlossen ist, kann die Vakuumpumpe in Betrieb genommen werden und Luft wird durch das Anschlussrohrelement 12 in Richtung der Vakuumkammer abgesaugt. Das Anschlussrohrelement oder die Abdeckung kann ein Belüftungselement enthalten, welches geöffnet werden kann, um den Innenraum der Vakuumkammer wieder auf Normaldruck zu bringen.

Fig. 8 zeigt eine Ansicht der Vakuumkammer gemäss Fig. 7 in geöffnetem Zustand und Fig. 9 zeigt eine Frontansicht der geöffneten Vakuumkammer der Fig. 8.

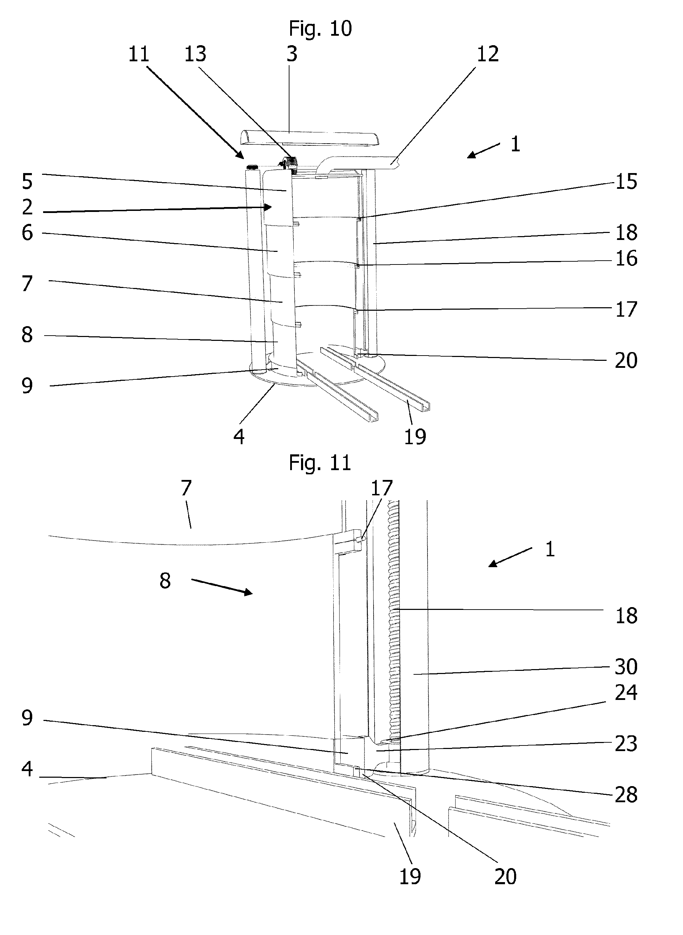

Fig. 10 eine Ansicht der Vakuumkammer der Fig. 7 in welcher der Innenraum der Vakuumkammer teilweise geschnitten dargestellt ist. Jedes der Wandelemente 6, 7, 8, 9 weist ein Flanschelement auf, welches sich entlang des unteren Endes des Wandelements entlang des Umfangs des Wandelements erstreckt.

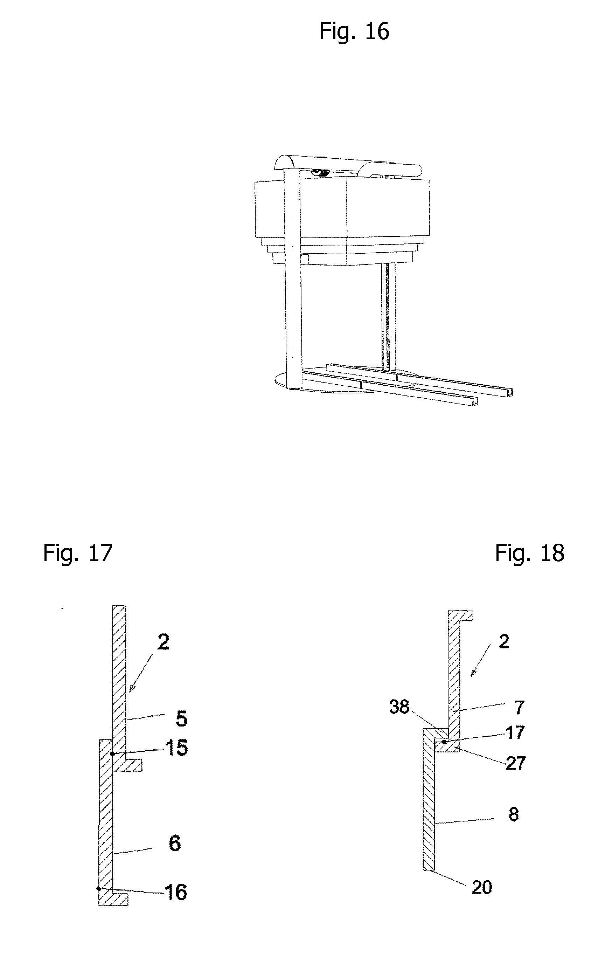

Fig. 11 zeigt ein Detail der Fig. 10, in welchem das unterste Wandelement 8 teilweise dargestellt ist. Das Wandelement 7 ist ebenfalls teilweise dargestellt. Das Wandelement 7 kann ein unteres Flanschelement aufweisen, welches sich entlang des Umfangs des Wandelements 7 auf der Aussenseite desselben erstreckt. Das Flanschelement kann als Vorsprung auf der Aussenseite des Wandelements 7 ausgebildet sein, was in Fig. 17 dargestellt ist. Im geschlossenen Zustand liegt das Flanschelement an dem oberen Ende des Wandelements 8 umfangsseitig an dessen Innenseite an. Das Flanschelement enthält eine Dichtung 17, welche die Aussenwand des Wandelements 8 berührt. Alternativ kann die Dichtung 17 auch am oberen Ende des Wandelements 8 angebracht sein. Nicht dargestellt ist eine

Begrenzungsvorrichtung, die verhindert, dass das untere Wandelement vom oberen Wandelement vollständig getrennt werden kann.

Das Auflageelement 9 ist mittels eines Koppelungselements 23 mit einer auf der Gewindestange 18 geführten Mutter 24 verbunden. Die Mutter enthält üblicherweise eine Anzahl von Kugeln, die durch ihre Rollbewegung bei Drehung der Gewindestange 18 eine vertikale Verschiebung des Auflageelements 9 bewirken. Wird die Gewindestange betätigt, kommt es somit zum Anheben oder Absenken der Wandelemente, je nachdem ob die Vakuumkammer geschlossen oder geöffnet werden soll. Die Gewindestange kann zumindest teilweise in einem Stangengehäuse 30 aufgenommen sein.

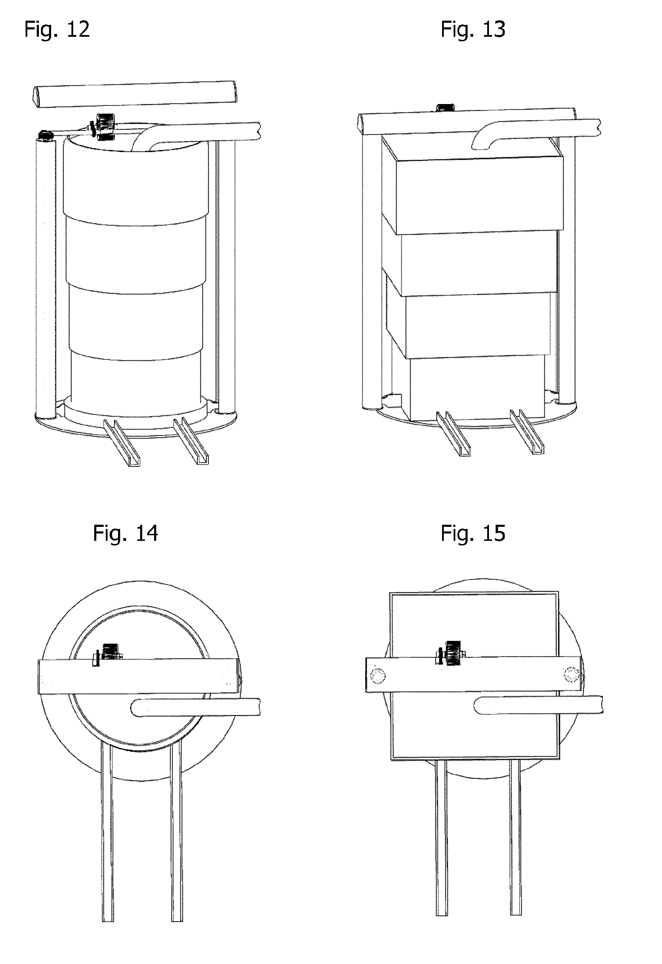

Fig. 12 zeigt eine Vakuumkammer mit kreisförmigem Querschnitt, die bereits in Zusammenhang mit den Fig. 7-11 beschrieben worden ist und an dieser Stelle nochmals zum Vergleich mit Fig. 13 gezeigt ist, die eine Vakuumkammer mit rechteckigem Querschnitt zeigt.

Fig. 14 zeigt die Vakuumkammer der Fig. 12 in einer Ansicht von oben, wobei die Abdeckung der Vakuumkammer, deren Antrieb sowie das Anschlussrohrelement sichtbar sind. Das Bodenelement sowie ein Teil des Befüllungs- oder Entleerungselements sind ebenfalls gezeigt.

Fig. 15 zeigt die Vakuumkammer der Fig. 13 in einer Ansicht von oben. Die Abdeckung der Vakuumkammer, deren Antrieb sowie das Anschlussrohrelement sind hierbei gleich wie in Fig. 14 ausgestaltet. Das Bodenelement sowie ein Teil des Befüllungs- oder Entleerungselements sind gleichartig wie in Fig. 14 ausgestaltet.

Fig. 16 zeigt die Vakuumkammer der Fig. 13 in geöffnetem Zustand. Die Vakuumkammer der Fig. 12 entspricht der Darstellung von Fig. 9 oder Fig. 10, sodass eine erneute Abbildung der Vakuumkammer gemäss Fig. 12 in geöffnetem Zustand zu Vergleichszwecken an dieser Stelle nicht notwendig erscheint.

Fig. 17 zeigt eine Dichtungslösung für zwei benachbarte Wandelemente gemäss einer ersten Variante, die in Zusammenhang mit Fig. 11 beschrieben ist.

Fig. 18 zeigt eine Dichtungslösung für zwei benachbarte Wandelemente gemäss einer zweiten Variante. Das obere Ende des Wandelements 8 kann auch als ein Flanschelement 38 ausgebildet sein. Zwischen dem Flanschelement 27 und dem Flanschelement 38 befindet sich die umlaufende Dichtung 17. Die in Fig. 18 gezeigte Lösung hat den Vorteil, dass die Dichtung nicht entlang der Aussenseite des jeweils unteren Wandelements aufliegt, wenn das Wandelement verschoben wird. Durch die Reibungskräfte, die beim Öffnen und Schliessen der Vakuumkammer durch die Gleitbewegung des Wandelements entstehen, kann es zu erhöhtem Verschleiss der Dichtung kommen. Die Dichtung in der in Fig. 18 gezeigten Lösung wird während der Bewegung der Wandelemente nicht beansprucht. Erst wenn die Vakuumkammer geschlossen ist, liegt das Flanschelement 38 auf dem Flanschelement 27 auf, sodass durch das Eigengewicht des jeweils unteren Wandelements eine auf das Dichtelement wirkende Druckkraft ausgeübt wird, wodurch das Dichtelement seine Dichtwirkung entfaltet.

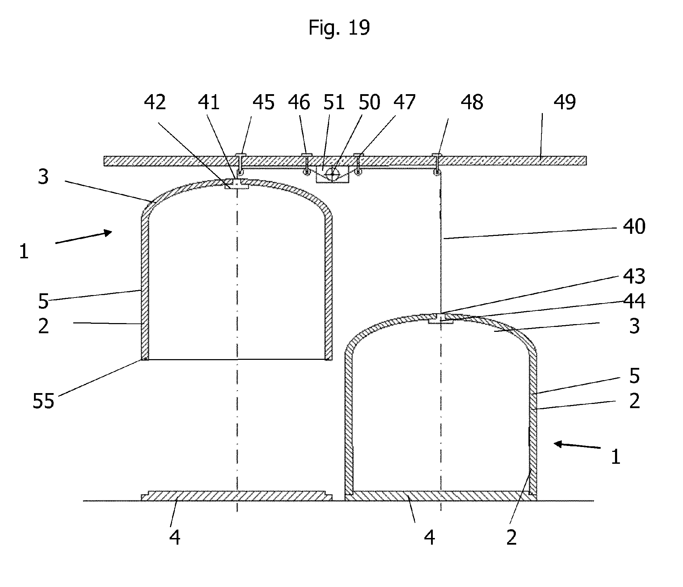

Fig. 19 zeigt eine Anordnung von zwei Vakuumkammern nach einem vierten Ausführungsbeispiel. In diesem Ausführungsbeispiel sind zwei gleichartige Vakuumkammern dargestellt, die in der Fig. 19 linksseitige Vakuumkammer im geöffneten Zustand, die in der Fig. 19 rechtsseitige Vakuumkammer in geschlossenem Zustand. Jede der Vakuumkammern 1 umfasst eine Wand 2 und eine Abdeckung 3. Im geschlossenen Zustand liegt die untere Kante der Wand 2 auf dem Bodenelement 4 auf. Die Vakuumkammern sind miteinander über einen Seilzug 40 verbunden. Der Seilzug 40 hat ein erstes Ende 41, welches in einer Verankerung 42 aufgenommen ist und ein Verbindungselement ausbildet und ein zweites Ende 43, welches in einer Verankerung 44 aufgenommen ist. Die Verankerungen 42, 44 sind in diesem Ausführungsbeispiel im Bereich des höchsten Punktes der kuppelförmigen Abdeckungen 3 angebracht. Jede der beiden Verankerungen bildet ein Verbindungselement aus. Nach einem nicht dargestellten Ausführungsbeispiel könnten auch eine Mehrzahl von Ösen oder anderen Befestigungsmitteln für die Enden des Seilzugs vorgesehen sein. Der obere Teil der Vakuumkammer, nämlich die Wand und die Abdeckung können mittels des Seilzugs angehoben oder abgesenkt werden. Der Seilzug ist über eine oder mehrere Umlenkrollen 45, 46, 47, 48 an einer Rahmenkonstruktion 49, beispielsweise der Decke eines Trägerelements oder einer

Produktionshalle befestigt. Des Weiteren kann eine Antriebsrolle 50 vorgesehen sein, die von einem Motor 51 angetrieben werden kann, um die Hebebewegung oder Absenkbewegung des oberen Teils der Vakuumkammer zu unterstützen. Vorteilhafterweise ist an dem der Vakuumkammer gegenüberliegenden Ende des Seilzugs ein Ausgleichsgewicht angebracht. In der vorliegenden Darstellung wird als Ausgleichsgewicht eine zweite Vakuumkammer verwendet. Die Antriebsrolle 50 sowie der Motor 51 sind an der Rahmenkonstruktion 49 befestigt.

Auf der Abdeckung kann auch ein Vakuumerzeuger, beispielsweise eine Vakuumpumpe angeordnet sein. In der vorliegenden Darstellung ist die Vakuumpumpe nicht gezeigt. Die Vakuumpumpe kann alternativ auch an der Rahmenkonstruktion befestigt sein. Mittels eines flexiblen Schlauchs wird eine fluiddichte Verbindung zwischen dem Innenraum der Vakuumkammer und der Vakuumpumpe hergestellt, sodass in geschlossenem Zustand der Vakuumkammer ein Vakuum angebracht werden kann.

Das Wandelement 5 weist an seinem unteren Ende eine umlaufende Dichtung 55 auf. Diese umlaufende Dichtung erstreckt sich ringförmig entlang des Umfangs des Wandelements entlang eines Rings, dessen Durchmesser zumindest gleich gross wie der Innendurchmesser des Wandelements ist. Wahlweise kann das untere Ende des Wandelements 5 einen Flansch umfassen, in welchem die Dichtung 55 aufgenommen ist.

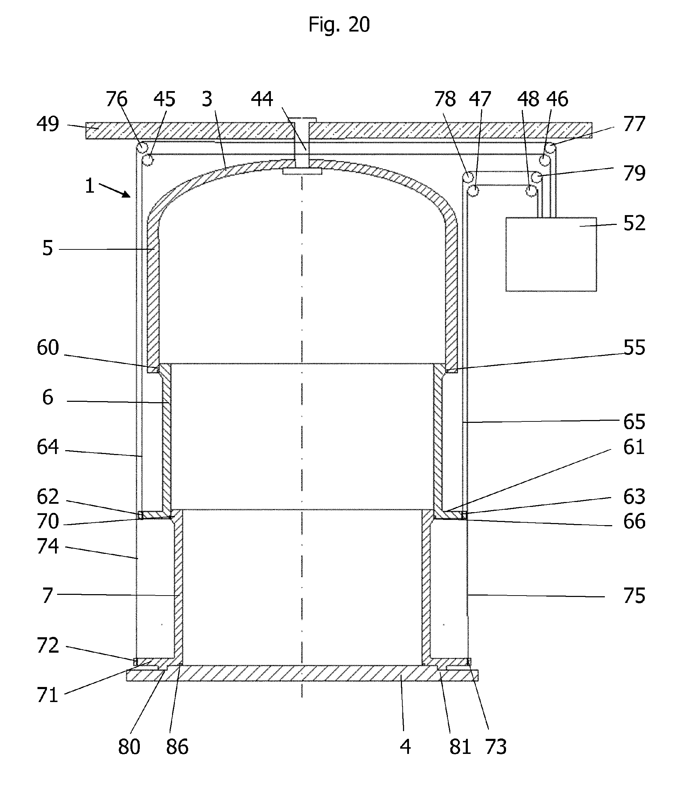

Fig. 20 zeigt eine Vakuumkammer nach einem fünften Ausführungsbeispiel im geschlossenen Zustand. Diese Vakuumkammer 1 besteht aus einer Abdeckung 3 sowie einer Wand 2 bestehend aus einer Mehrzahl von Wandelementen 5, 6, 7. Die Wandelemente sind derart ineinander verschiebbar, dass die Vakuumkammer durch Verschiebung der Wandelemente geöffnet oder geschlossen werden kann. Die Abdeckung 3 ist mittels einer Verankerung 44 fest an der Rahmenkonstruktion 49 angebracht. Das heisst die Abdeckung 3 ist mittels der Verankerung 44 an der Rahmenkonstruktion aufgehängt. Auch diese Verankerung ist eine Ausführungsform für ein Verbindungselement. Die Abdeckung 3 könnte auch als Teil der Rahmenkonstruktion ausgebildet sein und könnte beispielsweise mit der Rahmenkonstruktion lösbar oder unlösbar verbunden sein, beispielsweise an die Rahmenkonstruktion angeschweisst sein. An die Abdeckung 3 schliesst das Wandelement 5 an. Das Wandelement 5 weist die Form eines Zylinders auf. Die Querschnittsform kann wie in den vorherigen Ausführungsbeispielen beliebig gewählt werden, es können rechteckige, ovale oder Kombinationen aus verschiedenen Querschnitten gewählt werden. Die Querschnittsform kann daher in Bezug auf die in der Vakuumkammer zu behandelnden Produkte angepasst werden.

Das Wandelement 6, welches in der Fig. 20 unterhalb des Wandelements 5 anschliesst, kann entlang der Innenwand des Wandelements 5 verschoben werden. Daher weist das Wandelement 6 vorteilhafterweise zumindest teilweise dieselbe Querschnittsform wie das Wandelement 5 auf. Das Wandelement 6 weist an seinem oberen Ende einen umlaufenden Vorsprung 60 auf. Dieser Vorsprung weist an seinem äusseren Umfang eine Gleitfläche auf, welche bei Bewegung des Wandelements 6 an der Innenwand des Wandelements entlanggleitet. Das Wandelement 6 ist somit in den Innenraum des Wandelements 5 einschiebbar. Daher ist der äussere Durchmesser des Wandelements 6 zumindest für den Teil desselben, der in das Wandelement 5 eingeschoben wird, maximal gleich gross wie der Innendurchmesser des Wandelements 5. Das Wandelement 5 weist an seinem unteren Ende eine umlaufende Dichtung 55 auf. Diese umlaufende Dichtung erstreckt sich ringförmig entlang der Innenwand des Wandelements 5 entlang eines Rings, dessen Durchmesser im Wesentlichen gleich gross wie der Innendurchmesser des Wandelements 5 ist. Wenn das Wandelement 6 an seiner tiefsten Position angelangt ist, befindet sich der Vorsprung 60 gerade über der Dichtung 55. Die Dichtung 55 kann in dieser Lage die Wandelemente 5 und 6 gegeneinander fluiddicht abdichten, sodass ein Vakuum angelegt werden kann, wenn die Vakuumkammer geschlossen ist. Die Dichtung 55 ist ortsfest und wird nur dann beansprucht, wenn der Vorsprung 60 über der Dichtung 55 anliegt. Die Dichtung wird daher kaum auf Scherung beansprucht, was deren Lebensdauer erhöht.

Das untere Ende des Wandelements 6 ist als Flansch 61 ausgebildet. Dieser Flansch enthält eine Mehrzahl von Bohrungen 62, 63, die der Aufnahme von je einem Seilzug 64, 65 dienen. Mit diesem Seilzug 64, 65 kann das Wandelement 6 gegenüber dem Wandelement 5 verschoben werden. Die Seilzüge führen über mehrere Umlenkrollen 45, 46, 47, 48 zu einem Ausgleichsgewicht 52. Die Umlenkrollen 45, 46, 47, 48 sind nur schematisch dargestellt. Diese Umlenkrollen werden üblicherweise an der Rahmenkonstruktion 49 befestigt. Die Befestigung der Umlenkrollen ist der Einfachheit halber weggelassen worden.

Das Wandelement 7, welches in der Fig. 20 unterhalb des Wandelements 6 anschliesst, kann entlang der Innenwand des Wandelements 6 verschoben werden. Daher weist das Wandelement 6 vorteilhafterweise zumindest teilweise dieselbe Querschnittsform wie das Wandelement 5 auf. Das Wandelement 6 weist an seinem oberen Ende einen umlaufenden Vorsprung 70 auf. Dieser Vorsprung weist an seinem äusseren Umfang eine Gleitfläche auf, welche bei Bewegung des Wandelements 7 an der Innenwand des Wandelements 6 entlanggleitet. Das Wandelement 7 ist somit in den Innenraum des Wandelements 6 einschiebbar. Daher ist der äussere Durchmesser des Wandelements 7 zumindest für den Teil desselben, der in das Wandelement 6 eingeschoben wird, maximal gleich gross wie der Innendurchmesser des Wandelements 6. Das Wandelement 7 weist an seinem unteren Ende eine umlaufende Dichtung 86 auf. Diese umlaufende Dichtung dient der Abdichtung des Zwischenraums zwischen dem Wandelement 7 und dem Bodenelement 4, wenn das Wandelement 7 auf dem Bodenelement 4 aufliegt. Die umlaufende Dichtung ist somit an der Unterseite des Wandelements 7 angebracht. Das Wandelement 7 weist einen Flansch 71 auf. Der Flansch 71 weist einen Vorsprung 80 auf. Dieser Vorsprung 80 ist ringförmig ausgestaltet und dient der Zentrierung des untersten Wandelements sowie der darüber angeordneten Wandelemente.

Die Vakuumkammer wird geschlossen, indem das Wandelement oder die Wandelemente in Richtung des Bodenelements 4 abgesenkt werden. Wenn das Wandelement 7 an seiner tiefsten Position angelangt ist, grenzt der Vorsprung 80 gerade an einen Absatz 81 des Bodenelements 4 an, sodass das Wandelement 7 in der geschlossenen Position der Vakuumkammer in seiner Position fixiert bleibt. Alternativ könnte auch eine Nut vorgesehen sein, in welcher ein entsprechender Vorsprung des Bodenelements formschlüssig eingreifen kann. Die Dichtung 86 kann in dieser Lage das Wandelement 7 und das Bodenelement 4 gegeneinander fluiddicht abdichten, sodass ein Vakuum angelegt werden kann, wenn die Vakuumkammer geschlossen ist. Die Dichtung 86 wird im geschlossenen Zustand nur auf Druck beansprucht und nur dann, wenn der Flansch 71 auf dem Bodenelement aufliegt. Die Dichtung 86 wird daher nicht auf Scherung beansprucht, was deren Lebensdauer erhöht.

Der Flansch 71 enthält eine Mehrzahl von Bohrungen 72, 73, die der Aufnahme von je einem Seilzug 74, 75 dienen. Mit diesem Seilzug 74, 75 kann das Wandelement 7 gegenüber dem Wandelement 6 verschoben werden. Die Seilzüge führen über mehrere Umlenkrollen 76, 77, 78, 79 zu einem Ausgleichsgewicht 52. Es können auch mehrere Ausgleichgewichte vorgesehen sein. Die Umlenkrollen 76, 77, 78, 79 sind nur schematisch dargestellt. Diese Umlenkrollen werden üblicherweise an der Rahmenkonstruktion 49 befestigt. Die Befestigung der Umlenkrollen ist der Einfachheit halber in der Darstellung in Fig. 20 weggelassen worden.

Nicht dargestellt ist eine Antriebsrolle, die allerdings ähnlich wie im vorhergehenden Ausführungsbeispiel vorgesehen werden kann, um das Anheben oder Absenken der Wandelemente zu steuern. Des Weiteren kann als Ausgleichsgewicht eine weitere Vakuumkammer vorgesehen sein.

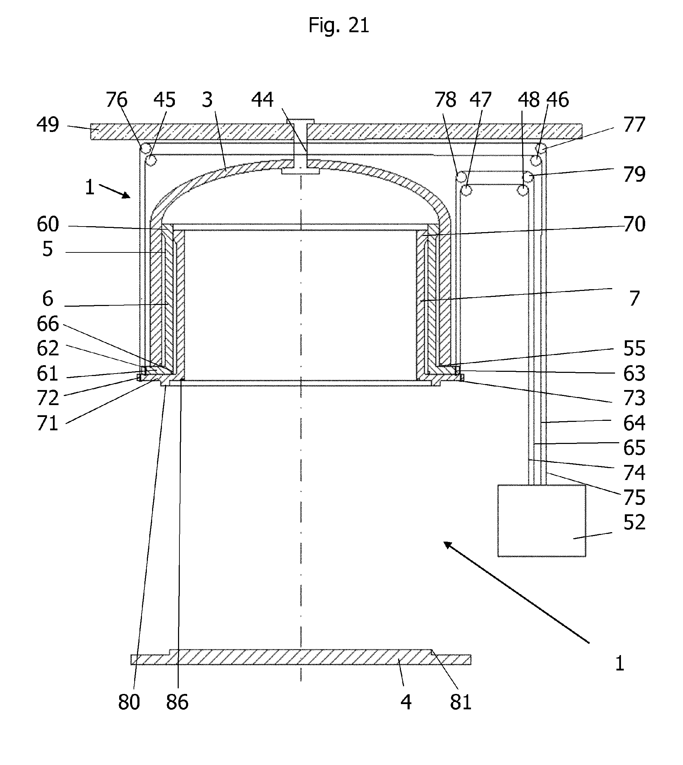

Fig. 21 zeigt die Vakuumkammer nach dem fünften Ausführungsbeispiel im offenen Zustand. Die Wandelemente 6, 7 befinden sich an ihrer höchstmöglichen Position. Das Bodenelement 4 ist in dieser Stellung frei zugänglich. Produkte für die Vakuumkühlung, beispielsweise Lebensmittel, können beliebig auf der Ablagefläche des Bodenelements verteilt werden.

## Patentansprüche

1. Vakuumkammer (1), umfassend eine Abdeckung (3), eine Wand (2) sowie ein Bodenelement (4), wobei die Abdeckung in einem ortsfesten Rahmen aufgenommen ist, wobei die Wand mit der Abdeckung verbunden ist, dass die Wand sich von der Abdeckung in Richtung des Bodenelements erstreckt, **dadurch gekennzeichnet, dass** die Wand (2) ein Wandelement (5, 6, 7, 8) umfasst, welches zumindest teilweise relativ zur Abdeckung (3) oder zum Bodenelement (4) verschiebbar ist, wobei das Wandelement (5, 6, 7, 8) eine erste Position aufweist, in welcher die Vakuumkammer geöffnet ist und von zumindest zwei Seiten zugänglich ist und eine zweite Position aufweist, in welcher die Vakuumkammer geschlossen ist.

2. Vakuumkammer (1) nach Anspruch 1, wobei das Wandelement (5, 6, 7, 8) in seiner ersten Position den grösstmöglichen Abstand zum Bodenelement aufweist.

3. Vakuumkammer (1) nach einem der vorhergehenden Ansprüche, wobei das Wandelement (5, 6, 7, 8) in seiner zweiten Position auf dem Bodenelement aufliegt.

4. Vakuumkammer (1) nach einem der vorhergehenden Ansprüche, wobei zwischen dem Wandelement (5, 6,7, 8) und dem Bodenelement (4) eine Dichtung (17, 20) angeordnet ist, sodass der Spalt zwischen Wandelement und Bodenelement fluiddicht verschliessbar ist, wenn sich das Wandelement in seiner zweiten Position befindet.

5. Vakuumkammer (1) nach einem der vorhergehenden Ansprüche, wobei das Wandelement (5, 6, 7, 8) eine Mehrzahl von Teilwandelementen umfasst.

6. Vakuumkammer (1) nach einem der vorhergehenden Ansprüche, wobei die Teilwandelemente (6, 7, 8) derart relativ zueinander verschiebbar sind, dass sie in der ersten Position ineinander angeordnet sind und/oder dass sie in der zweiten Position teleskopartig gegen einander derart bewegbar sind, sodass sie sich zwischen Bodenelement (4) und Abdeckung (3) erstrecken.

7. Vakuumkammer nach einem der Ansprüche 5 oder 6, wobei zwei benachbarte Teilwandelemente derart ausgestaltet sind, dass der äussere Umfang des zweiten Teilwandelements maximal dem inneren Umfang des ersten Teilwandelements entspricht, sodass das zweite Teilwandelement in das erste Teilwandelement einschiebbar ist.

8. Vakuumkammer (1) nach einem der vorhergehenden Ansprüche, wobei die Vakuumkammer (1) ein Verbindungselement (2, 42, 44) aufweist, mittels welchem sie an der Decke (14, 49) einer Halle angebracht ist oder in einer Rahmenkonstruktion (14, 49) aufgenommen ist.

9. Vakuumkammer (1) nach einem der vorhergehenden Ansprüche, wobei die Wand aus einer Abdeckung (3) und einem Wandelement (5) besteht.

10. Vakuumkammer (1) nach einem der vorhergehenden Ansprüche, wobei zwischen benachbarten Wandelementen (5, 6, 7, 8) und/oder dem Bodenelement (4) eine Dichtung (15, 16, 17, 55, 66) vorgesehen ist.

11. Vakuumkammer (1) nach einem der vorhergehenden Ansprüche, wobei eine Vakuumpumpe auf der Abdeckung (3), dem an äusserster Position gelegenen Wandelement (5) oder der Rahmenkonstruktion (49) angebracht ist.

12. Vakuumkammer nach einem der vorhergehenden Ansprüche, wobei zumindest eines der Wandelemente (5, 6, 7, 8) durch einen Seilzug oder mittels eines an einer Gewindestange führbaren Koppelungselements (23) verschiebbar ist.

13. Vorrichtung nach einem der vorhergehenden Ansprüche, wobei die Querschnittsform des Grundrisses des Wandelements oder der Wandelemente (5, 6, 7, 8) eine geschlossene Kurve ausbildet, die insbesondere Elemente aus der Gruppe der Kreise, Ellipsen, Vielecke enthält.

14. Verfahren zum Betrieb einer Vakuumkammer (1), welche eine Wand (2), ein Bodenelement (4) und eine Abdeckung (3) aufweist, wobei sich die Wand (2) im geschlossenen Zustand zwischen Bodenelement und Abdeckung erstreckt und den durch Bodenelement, Wand und Abdeckung gebildeten Innenraum (10) fluiddicht verschliesst, wobei die Wand (2) ein Wandelement (5, 6, 7, 8) umfasst, welches zumindest teilweise relativ zur Abdeckung oder zum Bodenelement (4) verschiebbar ist, wobei die Vakuumkammer in einem ersten Schritt geöffnet wird, wobei zum Öffnen das Wandelement (6, 7, 8) angehoben wird, wobei nach Anheben des Wandelements das behandelte Produkt der Vakuumkammer entnommen wird, wobei ein zu behandelndes Produkt in die Vakuumkammer eingebracht wird, auf das Bodenelement (4) abgestellt wird, sodann die Vakuumkammer geschlossen wird, indem das Wandelement (6, 7, 8) abgesenkt wird.
